# EUROPÄISCHE PATENTSCHRIFT

(11) **EP 1 988 380 B1**
(45) Veröffentlichungstag und Bekanntmachung des Hinweises auf die Patenterteilung: **15.12.2010**
(21) Anmeldenummer: 08004844.0
(22) Anmeldetag: 14.03.2008
(51) Int. Cl.: G01N 1/22

(54) **Probenahmevorrichtung**
Sample taking device
Dispositif de prélèvement d'échantillon

(30) Priorität: 04.05.2007 DE 202007006417 U
(43) Veröffentlichungstag der Anmeldung: 05.11.2008
(73) Patentinhaber: GEMÜ Gebrüder Müller Apparatebau GmbH & Co. KG, 74653 Ingelfingen (DE)
(72) Erfinder: Wiedmann, Michael, 88263 Horgenzell (DE)
(74) Vertreter: Steimle, Josef

(56) Entgegenhaltungen:
- EP-A2- 1 798 538
- DE-A1- 10 356 616
- DE-B3-102004 045 785
- DE-U1- 20 316 936

## Beschreibung

Die Erfindung befasst sich mit einer Probenahmevorrichtung, die insbesondere für Reindampf bestimmt ist.

Bisher war es kompliziert und zeitaufwändig mit Hilfe der Betätigung von mehreren in der Anlage befindlichen Ventilen einen Probenzug, insbesondere von Reindampf, bei Anlagen auf dem Lebensmittelsektor, Pharmasektor oder dergleichen durchzuführen. Auch besteht bisher eine Gefährdung des Bedienungspersonals bei der Durchführung derartiger Probenzüge im Hinblick auf die hohen Temperaturen von dampfförmigen Medien.

Aus der DE 203 16 936 U1 ist ein Probeentnahmeventil bekannt, bei welchem das Ventil mittels Dampf sterilisiert und anschließend das Ventilgehäuse mit einem Kühlmittel gekühlt wird. Aus der DE 10 2004 045 785 B3 ist ein Probeentnahme- oder -zugabeventil bekannt, mit welchem ein Medium vor der Zugabe mittels Dampf sterilisiert werden kann.

Die Erfindung zielt darauf ab, eine Probenahmevorrichtung, insbesondere für Reindampf, bereitzustellen, welche eine weitgehend gefahrlose Probenahme, insbesondere von Reindampf auf zuverlässige und einfache sowie zeitsparende Weise gestattet.

Nach der Erfindung wird hierzu eine Probenahmevorrichtung, insbesondere für Reindampf bereitgestellt, welche sich dadurch auszeichnet, dass ein gemeinsamer Grundkörper einen Dampfeinlass, einen Dampfauslass, dazwischen ein erstes Ventil, welches mit einer zwangsgekühlten und mittels eines zweiten Ventils absperrbaren Kondensationskammer kommunizierend in Verbindung ist, und einen mittels eines dritten Ventils steuerbaren Kondensatauslass umfasst.

Bei der erfindungsgemäßen Probenahmevorrichtung werden die zur Durchführung eines Dampf-, insbesondere eines Reindampfprobenzugs erforderlichen Komponenten und Einrichtungen in einem gemeinsamen Grundkörper untergebracht, so dass dieser lediglich in eine dampfführende Leitung eingebaut werden zu braucht, und einerseits die dampfführende Leitung eingangsseitig mit dem Dampfeinlass des Grundkörpers und auslassseitig mit dem Dampfauslass des Grundkörpers lediglich verbunden werden zu braucht. Hierdurch erhält man eine vereinfachte Handhabung bei der Durchführung eines Probenzugs, da alle Komponenten und Einrichtungen in dem gemeinsamen Grundkörper zur Durchführung einer Probenahme verwirklicht sind. Ferner umfasst die Probenahmevorrichtung nach der Erfindung auch Einrichtungen zur Zwangskühlung des mit Hilfe der Probenahmevorrichtung abgezweigten Dampfes, insbesondere Reindampfes während seines Aufenthalts in der im Grundkörper ausgebildeten Kondensationskammer, so dass Dank der Zwangskühlung das dampfführende Medium in der Kondensationskammer weitgehend vollständig kondensiert und dann schließlich das Kondensat mittels eines dritten Ventils in steuerbarer Weise über einen Kondensatauslass aus dem gemeinsamen Grundkörper zur Probenahme entnommen werden kann.

Wesentlich bei der erfindungsgemäßen Probenahmevorrichtung ist somit die Tatsache, dass mittels der einheitlichen und gemeinsamen Zusatzeinrichtung auf zuverlässige, einfache und schnelle Weise eine Dampfprobe aus einer dampfführenden Leitung der Anlage entnommen werden kann, ohne dass eine Verletzungsgefahr durch Verbrühungen oder dergleichen besteht, so dass das Bedienungspersonal nicht mit dem dampfförmigen Medium in unmittelbare Berührung kommt, sondern lediglich das in der Probenahmevorrichtung gebildete Kondensat dann in einem geeignete Auffangbehälter für das erhaltene Kondensat gesammelt und analysiert werden kann. Ferner ist die Probenahmevorrichtung nach der Erfindung auch derart ausgelegt, dass die für einen Probenzug erforderlichen steuerungstechnischen Maßnahmen an der Probenahmevorrichtung sich auch weitgehend vollautomatisch durchführen lassen, so dass die erfindungsgemäße Probenahmevorrichtung die Durchführung von Probenzügen auf automatische Weise gestatten kann.

Vorzugsweise ist die Auslegung der Probenahmevorrichtung nach der Erfindung derart getroffen, dass zur Probenahme das erste Ventil geöffnet und das zweite Ventil geschlossen ist, so dass Dampf, insbesondere Reindampf, in die zwischen den beiden Ventilen gebildete Kondensationskammer gelangt, welche in Wirkverbindung mit einer Kühlkammer im gemeinsamen Grundkörper derart steht, dass der Dampf mittels der Kühlkammer konvektiv und effektiv gekühlt ist. Bei dieser bevorzugten Ausgestaltungsform der Probenahmevorrichtung ist in dem gemeinsamen Grundkörper auch eine Kühlkammer integriert, welche konvektiv in Wirkverbindung mit der Kondensationskammer ist, so dass eine möglichst effektive Kondensatbildung in der Kondensationskammer beim Probenzug gewährleistet ist. Hierdurch kann das dampfförmige Medium in der Kondensationskammer einfach und schnell in den kondensierten Zustand in Form eines Kondensats überführt werden.

Vorzugsweise ist die Kühlkammer von einem Kühlmedium, wie Druckluft oder dergleichen, durchströmt. Da bei den meisten für eine derartige Probenahmevorrichtung in Betracht kommenden Anlagen Druckluft zur Verfügung steht, kann diese gleich bei der erfindungsgemäßen Probenahmevorrichtung als Kühlmedium eingesetzt werden und es können entsprechende Druckluftleitungen oder andere Druckgasleitungen direkt an den gemeinsamen Grundkörper angeschlossen werden. Hierdurch lässt sich die erfindungsgemäße Probenahmevorrichtung auf günstige Weise in Anlagen entsprechend integrieren. Natürlich können als Kühlmedien auch andere Medien außer Druckluft in Betracht kommen, wie zum Beispiel allgemein Druckgase und gegebenenfalls auch Wasser. Somit ist bei der erfindungsgemäßen Probenahmevorrichtung das Kühlmedium nahezu frei wählbar.

Im Falle von Sterilanwendungen kann gemäß einer bevorzugten Ausführungsform der Probenahmevorrichtung im gemeinsamen Grundkörper eine Sterilisationseinrichtung integriert sein, welche mittels eines vierten Ventils steuerbar ist. Auf diese Weise lassen sich vor der Probenahme sterile Bedingungen im Bereich der Probenahmevorrichtung erzeugen und einhalten, was insbesondere im Falle einer Dampfprobenahme auf dem Gebiet der Pharmaindustrie wesentlich sein kann.

Zusammenfassend stellt die Erfindung somit eine Probenahmevorrichtung in möglichst gedrängter Bauweise bereit, welche sich nur mit geringem Einbauaufwand verbunden auf einfache Weise in Anlagen integrieren lässt, und welche eine Probenahme, insbesondere von Reindampf, auf effektive Weise gestattet.

Die Erfindung wird nachstehend anhand einer bevorzugten Ausführungsform ohne beschränkenden Charakter unter Bezugnahme auf die beigefügte Zeichnung erläutert. Darin gilt:
- Fig. 1: ist eine schematische perspektivische Seitenansicht einer Probenahme- vorrichtung,
- Fig. 2: ist eine perspektivische Gesamtansicht eines gemeinsamen Grundkör- pers der Probenahmevorrichtung nach Fig. 1, und
- Fig. 3: ist eine Schnittansicht eines gemeinsamen Grundkörpers längs der Linie III-III in Fig. 2.

In den Figuren der Zeichnung sind gleiche oder ähnliche Teile mit denselben Bezugszeichen versehen.

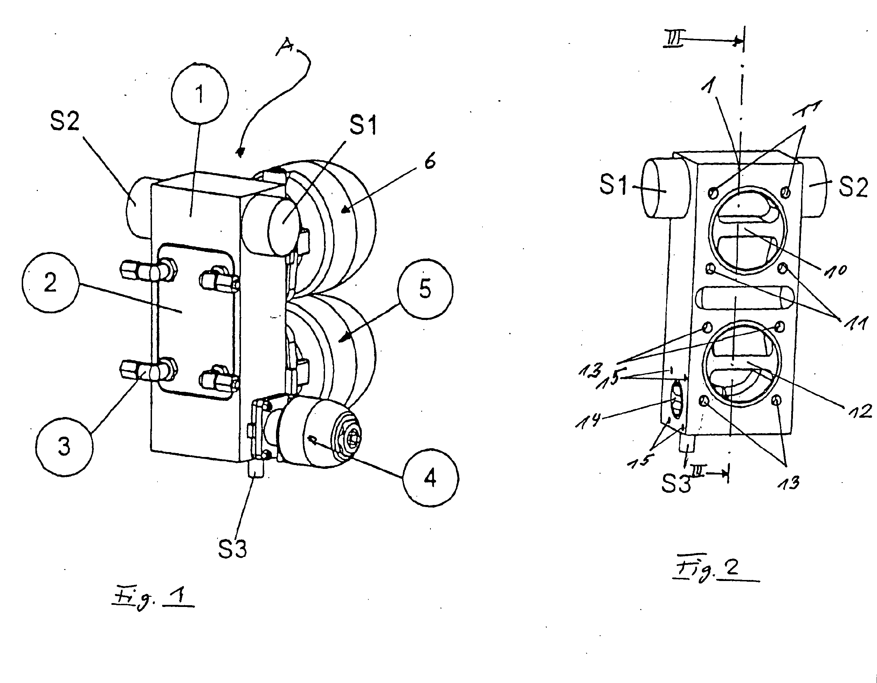

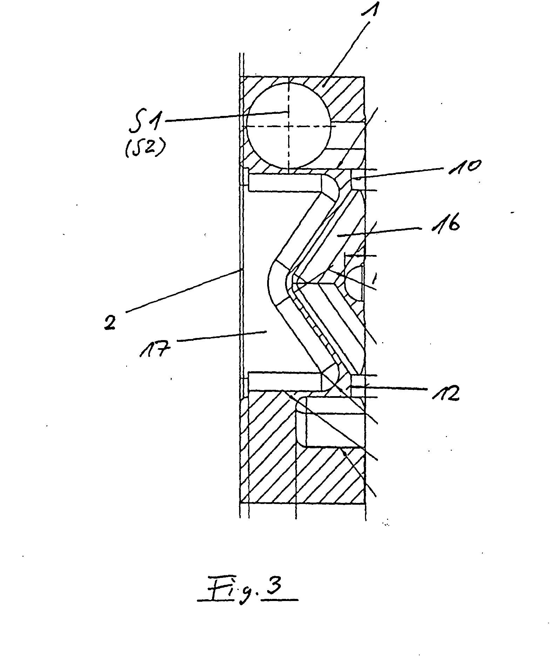

In Fig. 1 ist die Probenahmevorrichtung in einer perspektivischen Ansicht dargestellt und dort insgesamt mit A bezeichnet. Diese Probenahmevorrichtung A ist insbesondere für Reindampf bestimmt. Die Probenahmevorrichtung A umfasst einen insgesamt mit 1 bezeichneten gemeinsamen Grundkörper. Der Grundkörper 1 umfasst einen Dampfeinlassstutzen S1, einen Dampfauslassstutzen S2 und einen Kondensatablassstutzen S3. Ferner umfasst die Probenahmevorrichtung A an dem gemeinsamen Grundkörper 1 ein drittes Ventil 4, ein so genanntes Kondensatablassventil 4, ferner ein erstes Ventil 6 und ein zweites Ventil 5, wobei die Ventile 4, 5, 6 im am Grundkörper 1 angebauten Zustand in Fig. 1 gezeigt sind und somit im Wesentlichen nur die Ventilbetätigungseinrichtungen für Ventile 4, 5 und 6 mit ihren Gehäusen zu sehen sind. Mit 2 ist in Fig. 1 eine Abdeckung gezeigt, welche eine aus den nachstehend Figuren der Zeichnung, insbesondere Fig. 3 ersichtliche Kühlkammer nach außen hin abschließt und die Anschlüsse 3 für die Durchleitung des Kühlmediums, wie Druckluft, trägt.

In Fig. 2 ist in einer perspektivischen Ansicht der gemeinsame Grundkörper 1 als Einzelteildarstellung gezeigt, wenn die entsprechenden Ventilbetätigungseinrichtungen der Ventile 4, 5 und 6 aus Fig. 1 abgenommen sind. Von dem ersten Ventil 6 ist im gemeinsamen Grundkörper 1 ein Ventilsteg 6 zu ersehen, mit dem ein geeignetes Ventilelement (nicht gezeigt) der zugeordneten Ventilbetätigungseinrichtung zusammenarbeitet, so dass das erste Ventil 6 auf entsprechend geeignete Weise geöffnet und geschlossen werden kann. Auch sind aus Fig. 2 Befestigungsöffnungen 11 zu ersehen, mittels welchen die Ventilbetätigungseinrichtung und der Ventilantrieb des ersten Ventils 6 an dem gemeinsamen Grundkörper 1 befestigt werden kann.

Im unteren Bereich des gemeinsamen Grundkörpers 1 ist ein weiterer Ventilsteg 12 zu ersehen, welcher dem zweiten Ventil 5 zugeordnet ist und mit welchem ein geeignetes Ventilelement, wie beispielsweise eine Membrane, einer Ventilbetätigungs- und -antriebseinrichtung des zweiten Ventils 5 zusammenarbeiten kann, so dass das zweite Ventil 5 mit Hilfe der aus Fig. 1 schematisch zu ersehenden Ventilbetätigungs- und -antriebseinrichtung geschlossen und geöffnet werden kann. Auch sind aus Fig. 2 Befestigungsöffnungen 13 zu ersehen, welche zur Anbringung der Ventilbetätigungs- und -antriebseinrichtung an dem gemeinsamen Grundkörper 1 dienen.

Seitlich und in der Nähe des Kondensatablassstutzens S3 ist in Fig. 2 ein Ventilsteg 14 zu ersehen, welcher dem dritten Ventil 4 bzw. dem Kondensatablassventil 4 zugeordnet ist. Mit Hilfe eines geeigneten und nicht näher dargestellten Ventilelements lässt sich bei Betätigen der Ventilbetätigung- und -antriebseinrichtung des dritten Ventils 4 dieses Ventil 4 öffnen und absperren. Ferner sind dort Befestigungsöffnungen 15 angedeutet, welche zum Anbringen der Ventilbetätigungs- und -antriebseinrichtung des dritten Ventils 4 an dem gemeinsamen Grundkörper 1 dienen.

Wie aus der Fig. 3 in einer Schnittdarstellung des gemeinsamen Grundkörpers 1 zu ersehen ist, ist in dem gemeinsamen Grundkörper 1 eine Kondensationskammer 16 zwischen den beiden Ventilen 6 und 5 ausgebildet, welche mit Hilfe des zweiten Ventils 5 in seiner Schließstellung absperrbar ist. Unmittelbar in der Dickenrichtung des gemeinsamen Grundkörpers 1 anschließend an die Kondensationskammer 16 ist eine Kühlkammer 17 in dem gemeinsamen Grundkörper 1 ausgebildet, welche mittels der aus Fig. 1 zu ersehenden Abdeckung 2 verschlossen ist. Zwischen der Kondensationskammer 16 und der Kühlkammer 17 bleibt Material mit geringer Wandstärke stehen, so dass das in diese Kühlkammer 17 eingeleitete Kühlmedium, wie Druckluft, Wasser oder dergleichen konvektiv die Kondensationskammer 16 kühlen kann. Das Kühlmedium wird über die Anschlüsse 3 nach Fig. 1 durch die Kühlkammer 17 durchgeleitet. Zur Durchführung eines Probenzugs mit Hilfe der Probenahmevorrichtung A wird wie nachstehend angegeben vorgegangen.

Nach entsprechenden vorbereitenden Arbeiten und der Einleitung des Kühlmediums in die Kühlkammer 17 wird das erste Ventil 6 geöffnet, während das zweite Ventil 5 geschlossen bleibt. Nunmehr kann durch Unterbrechung der Durchgangsverbindung zwischen Dampfeinlass S1 und Dampfauslass S2 ein Teil des Dampfes, insbesondere Reindampfes, in die Kondensationskammer 16 gelangen. Durch die konvektive Zwangskühlung mit Hilfe der Kühlkammer 17 wird im gemeinsamen Grundkörper 1 der Dampf in der Kondensationskammer 16 kondensiert und in den flüssigen Zustand überführt. Nachdem ausreichend Dampf in die Kondensationskammer 16 eingeleitet worden ist, wird das erste Ventil 6 wieder geschlossen und nach der Kondensation des Dampfes in der Kondensationskammer 16 wird das Kondensat durch Öffnen des dritten Ventils bzw. Kondensatablassventils 4 zu dem Kondensatablassschutz S3 zu einem nicht näher dargestellten Sammelbehälter beispielsweise abgezogen. Um mit Hilfe der Probenahmevorrichtung A eine ausreichende Kondensatmenge zu erzeugen, werden die vorstehend beschriebenen Schließ- und Öffnungsvorgänge der Ventile 6, 5, 4 wiederholt ausgeführt.

Wenn die Ventile 4, 5, 6 über eine nicht dargestellte gemeinsame Steuereinrichtung gesteuert werden, so lassen sich die vorstehenden Abläufe für die Gewinnung von Dampfkondensat nahezu vollautomatisch über die Ansteuerung der entsprechenden Betätigungs- und -antriebseinrichtungen der Ventile 4, 5, 6 durchführen. Somit gestattet die Probenahmevorrichtung A eine zuverlässige, schnelle und nahezu verletzungsgefahrlose Aufbereitung eines Kondensats aus Dampf, insbesondere Reindampf. Da die funktionswesentlichen Komponenten und Einzelteile der Probenahmevorrichtung A in einem gemeinsamen Grundkörper 1 zusammengeführt und in diesem integriert sind, lässt sich die Probenahmevorrichtung A auch auf kostengünstige Weise in entsprechende dampfführende Leitungen und Arbeitsanlagen einbauen. Hierzu braucht im Wesentlichen nur die entsprechende dampfführende Leitung aufgetrennt zu werden und die Probenahmevorrichtung A über den Dampfeinlassstutzen S1 und den Dampfauslassstutzen S2 in die Gesamtanlage eingebunden zu werden. Auf diese Weise lassen sich die Arbeitsschritte für eine Probenahme mit Hilfe der erfindungsgemäßen Probenahmevorrichtung A wesentlich wirtschaftlicher ausführen und realisieren.

Obgleich in der Zeichnung nicht näher dargestellt ist, kann in den gemeinsamen Grundkörper 1 eine Sterilisationseinrichtung integriert sein, welche mittels eines weiteren (nicht dargestellten) Ventils steuerbar ist. Eine solche Sterilisation kann insbesondere bei Anlagen für die Pharmaindustrie oder zur Vermeidung von Verfälschungen des mit Hilfe der Probenahmevorrichtung A gewonnenen Kondensats erforderlich oder erwünscht sein. Über entsprechende im Grundkörper 1 integrierte Sterilisationskanäle werden die Ventilbereiche der ersten, zweiten und dritten Ventile 4, 5, 6 durch entsprechende wechselweise Schaltungen für das zugeordnete Ventil durch die Sterilisationseinrichtung sterilisiert, und auch die Kondensationskammer 16 selbst. Nach Abschluss eines solchen Sterilisationsvorganges kann dann auf die vorstehend beschriebene Weise mit Hilfe der Probenahmevorrichtung A ein Probenzug durchgeführt und ein Reindampfkondensat über das Kondensatablassventil 4 abgezogen werden.

Obgleich die Erfindung voranstehend anhand einer bevorzugten Ausführungsform näher erläutert und beschrieben worden ist, sind selbstverständlich zahlreiche Abänderungen und Modifikationen möglich, die der Fachmann im Bedarfsfall treffen wird, ohne den Erfindungsgedanken zu verlassen. So lassen sich die entsprechenden Öffnungs- und Schließzyklen der Ventile der Probenahmevorrichtung A auf einfache Weise an die jeweils gewünschten Anforderungen und den bestimmungsgemäßen Anwendungszweck anpassen. Ferner können bedarfsabhängig Prallbleche oder dergleichen in die Kühlkammer 17 und/oder die Kondensationskammer 16 eingebaut werden, um eine effiziente Zwangskühlung und Kondensatbildung zu erzielen. Gegebenfalls können auch noch Drosseleinrichtungen, beispielsweise zur besseren Druckentlastung eingebaut werden, so wie gegebenenfalls Schalldämpfer oder dergleichen, um Geräuschentwicklungen zu reduzieren. Prinzipiell können in der Kühlkammer 17 noch zusätzliche Kühlelemente angeordnet werden, welche beispielsweise aus Aluminium oder dergleichen bestehen.

### Bezugszeichenliste

- A: Probenahmevorrichtung insgesamt
- 1: gemeinsamer Grundkörper
- 2: Abdeckung
- 3: Anschluss für Kühlmedium
- 4: drittes Ventil d.h. Kondensatablassventil
- 5: zweites Ventil
- 6: erstes Ventil
- S1: Dampfeinlassstutzen
- S2: Dampfauslassstutzen
- S3: Kondensatablassstutzen

- 10: Ventilsteg von 6
- 11: Befestigungsöffnungen für 6
- 12: Ventilsteg von 5
- 13: Befestigungsöffnungen für 5
- 14: Ventilsteg von 4
- 15: Befestigungsöffnungen für 4
- 16: Kondensationskammer
- 17: Kühlkammer

## Patentansprüche

1. Probenahmevorrichtung, insbesondere für Reindampf, **dadurch gegekennzeichnet**, dass ein gemeinsamer Grundkörper (1) einen Dampfeinlass (S1), einen Dampfauslass (S2), dazwischen ein erstes Ventil (6), welches mit einer zwangsgekühlten und mittels eines zweiten Ventils (5) absperrbaren Kondensationskammer (16) kommunizierend in Verbindung ist, und einen mittels eines dritten Ventils (4) steuerbaren Kondensatauslass (S3) umfasst.

2. Probenahmevorrichtung nach Anspruch 1, **dadurch gekennzeichnet, dass** zur Probenahme das erste Ventil (6) geöffnet und das zweite Ventil (5) geschlossen ist und die dazwischen gebildete Kondensationskammer (16) in Wirkverbindung mit einer Kühlkammer (17) konvektiv gekühlt ist.

3. Probenahmevorrichtung nach Anspruch 2, **dadurch gekennzeichnet, dass** die Kühlkammer (17) von einem Kühlmedium, wie Druckluft oder dergleichen, durchströmt ist.

4. Probenahmevorrichtung nach einem der vorangehenden Ansprüche, **dadurch gekennzeichnet, dass** in dem gemeinsamen Grundkörper (1) eine Sterilisationseinrichtung integriert ist, welche mittels eines weiteren Ventils steuerbar ist.

## Claims

1. Sampling device, particularly for pure steam, **characterised in that** a common main body (1) comprises a steam inlet (S1), a steam outlet (S2), a first valve (6) situated therebetween which is in communicating connection with a force-cooled condensation chamber (16) which can be shut off by means of a second valve (5), and a condensate outlet (S3) able to be controlled by means of a third valve (4).

2. Sampling device according to claim 1, **characterised in that**, for sampling, the first valve (6) is open and the second valve (5) is closed and the condensation chamber (16) formed therebetween is convectively cooled in operative contact with a cooling chamber (17).

3. Sampling device according to claim 2, **characterised in that** there is a cooling medium such as compressed air or the like flowing through the cooling chamber (17).

4. Sampling device according to one of the preceding claims, **characterised in that** a sterilising arrangement which can be controlled by means of a further valve is built into the common main body (1).

## Revendications

1. Dispositif de prélèvement d'échantillons, en particulier de vapeur stérile, **caractérisé en ce qu'**un corps de base commun (1) comprend un conduit d'admission de la vapeur (S1), un conduit d'émission de la vapeur (S2), conduits, entre lesquels est disposée une première soupape (6) reliée, de façon à communiquer avec elle, à une chambre de condensation (16), qui est refroidie par pompe et arrêtable au moyen d'une seconde soupape (5), ainsi qu'une évacuation de condensât (S3) commandable au moyen d'une troisième soupape (4).

2. Dispositif de prélèvement d'échantillons suivant la revendication 1, **caractérisé en ce que** pour le prélèvement d'échantillons, la première soupape (6) est ouverte et la seconde soupape (5) est fermée et la chambre de condensation (16), qui est formée entre elles, est refroidie par convection en raison de l'interaction avec une chambre de refroidissement (17).

3. Dispositif de prélèvement suivant la revendication 2, **caractérisé en ce que** la chambre de refroidissement (17) est traversée par un milieu refroidissant, tel que de l'air comprimé ou similaire.

4. Dispositif de prélèvement d'échantillons suivant une des revendications précédentes, **caractérisé en ce qu'**un dispositif de stérilisation, qui peut être commandé par une autre soupape, est intégré dans le corps de base commun (1).
